(19) Europäisches Patentamt
European Patent Office
Office européen des brevets

(11) Veröffentlichungsnummer: **0 003 521**
**B1**

(12) # EUROPÄISCHE PATENTSCHRIFT

(45) Veröffentlichungstag der Patentschrift: **02.09.81**

(51) Int. Cl.³: **C 08 G 18/08,** C 08 G 18/28, C 09 J 3/16

(21) Anmeldenummer: **79100185.2**

(22) Anmeldetag: **22.01.79**

(54) **Wässrige Lösungen oder Dispersionen von Polyisocyanat-Polyadditionsprodukten, ein Verfahren zu ihrer Herstellung, sowie ihre Verwendung als Klebemittel.**

(30) Priorität: **03.02.78 DE 2804609**

(43) Veröffentlichungstag der Anmeldung: **22.08.79 Patentblatt 79/17**

(45) Bekanntmachung des Hinweises auf die Patenterteilung: **02.09.81 Patentblatt 81/35**

(84) Benannte Vertragsstaaten: **BE DE FR GB IT NL**

(56) Entgegenhaltungen:
**FR-A-1 496 584**
**FR-A-2 303 034**
**FR-A-2 390 459**

(73) Patentinhaber: **BAYER AG, Zentralbereich Patente, Marken und Lizenzen, D-5090 Leverkusen 1, Bayerwerk (DE)**

(72) Erfinder: **Wenzel, Wolfgang, Dr., Peter-Landwehr-Strasse 13, D-5060 Bergisch-Gladbach 2 (DE)**
Erfinder: **Hombach, Rudolf, Dr., Roggendorfstrasse 63, D-5000 Koeln 80 (DE)**
Erfinder: **Meckel, Walter, Dr., Zonser Strasse 9, D-4040 Neuss (DE)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

EP 0 003 521 B1

BUNDESDRUCKEREI BERLIN

# Wäßrige Lösungen oder Dispersionen von Polyisocyanat-Polyadditionsprodukten, ein Verfahren zu ihrer Herstellung sowie ihre Verwendung als Klebemittel

Die vorliegende Erfindung betrifft ein neues Verfahren zur Herstellung von wäßrigen Lösungen bzw. Dispersionen von ionisch modifizierten Polyisocyanat-Polyadditionsprodukten sowie die Verwendung dieser Lösungen bzw. Dispersionen als Klebemittel für beliebige Substrate, insbesondere zum Verkleben von Gummi.

Verfahren zur Herstellung wäßriger Lösungen bzw. Dispersionen von ionisch modifizierten Urethan- und/oder Harnstoffgruppen aufweisenden Polyisocyanat-Polyadditionsprodukten sind bekannt und werden beispielsweise in folgenden Literaturstellen beschrieben: DE-PS 880 485, DE-AS 1 044 404, US-PS 3 036 998, DE-PS 1 178 586, DE-PS 1 134 946, DE-AS 1 237 306, DE-OS 1 595 602, US-PS 3 756 992, DE-OS 2 019 324, DE-OS 2 035 732, DE-OS 2 446 440, US-PS 3 479 310 und Angewandte Chemie 82, 35 (1970).

Die beispielsweise in diesen Literaturstellen beschriebenen wäßrigen Lösungen bzw. Dispersionen eignen sich für die verschiedensten Einsatzgebiete, u. a. auch zur Beschichtung bzw. Verklebung beliebiger Substrate. Ein Nachteil der Lösungen bzw. Dispersionen des genannten Standes der Technik ist darin zu sehen, daß sie zum Verkleben von Polymerisaten, insbesondere von Gummi mit sich selbst und anderen Materialien, nur bedingt geeignet sind. Dies gilt auch für wäßrige Polyurethandispersionen, die entsprechend der Lehre der FR-PS 1 496 584 sowohl Sulfonat- als auch Carboxylatgruppen aufweisende Polyurethane enthalten.

Aufgabe der vorliegenden Erfindung war es, ein Verfahren zur Herstellung von Lösungen bzw. Dispersionen von Polyisocyanat-Polyadditionsprodukten zur Verfügung zu stellen, welche als Klebemittel für beliebige Substrate, insbesondere als Klebemittel für Gummimaterialien besser geeignet sind als die Lösungen bzw. Dispersionen des genannten Standes der Technik.

Das nachstehend näher beschriebene erfindungsgemäße Verfahren weist einen Weg zu derartigen wäßrigen Lösungen bzw. Dispersionen.

Gegenstand der vorliegenden Erfindung sind wäßrige Lösungen oder Dispersionen von Polyisocyanat-Polyadditionsprodukten, gekennzeichnet durch einen Gehalt von 0,01 bis 200 Milliäquivalenten pro 100 g Sulfonationen $-SO_3^{\ominus}$ und 0,01 bis 200 Milliäquivalenten pro 100 g an Carboxylgruppen $-COOH$, bezogen auf gelöstes bzw. dispergiertes Polyisocyanat-Polyadditionsprodukt.

Gegenstand der vorliegenden Erfindung ist auch ein Verfahren zur Herstellung derartiger wäßriger Lösungen oder Dispersionen von ionische Gruppen aufweisenden Polyisocyanat-Polyadditionsprodukten durch Umsetzung von

a) organischen Polyisocyanaten, gegebenenfalls unter gleichzeitiger Mitverwendung von organischen Monoisocyanaten mit
b) organischen Verbindungen, welche mindestens zwei gegenüber Isocyanatgruppen im Sinne der Isocyanat-Additionsreaktion reaktionsfähige Gruppe enthalten, gegebenenfalls unter Mitverwendung von organischen Verbindungen, welche eine gegenüber Isocyanatgruppen im Sinne der Isocyanatadditionsreaktion reaktionsfähige Gruppe enthalten,

wobei als Komponente a) und/oder b) Verbindungen (mit)verwendet werden, welche ionische Gruppen und/oder in ionische Gruppen überführbare Gruppen enthalten, die im Anschluß an die Umsetzung zumindest teilweise in an sich bekannter Weise in ionische Gruppen überführt werden, und wobei entweder die Umsetzung zumindest teilweise in Gegenwart von Wasser so durchgeführt wird, daß als Umsetzungsprodukt direkt eine wäßrige Lösung oder Dispersion entsteht, oder die Umsetzung in Abwesenheit von Wasser durchgeführt wird, worauf sich eine Überführung der Umsetzungsprodukte in eine wäßrige Lösung oder Dispersion in an sich bekannter Weise anschließt, dadurch gekennzeichnet, daß man

(i) als Verbindungen mit ionischen Gruppen und/oder in ionische Gruppen überführbare Gruppen, Sulfonat- oder Sulfonsäuregruppen aufweisende Verbindungen verwendet,
(ii) außer den bereits genannten Aufbaukomponenten Verbindungen mit freien Carboxylgruppen und mit gegenüber Isocyanatgruppen reaktionsfähigere Gruppen als diese Carboxylgruppen aufweisende Verbindungen mitverwendet, und
(iii) Art und Mengenverhältnisse der Aufbaukomponenten sowie den Neutralisations- bzw. Quaternierungsgrad der genannten potentiellen ionischen Gruppen so wählt, daß in den gelösten bzw. dispergierten Polyisocyanat-Polyadditionsprodukten, bezogen auf Feststoff, 0,01 bis 200 Milliäquivalente pro 100 g an Sulfonationen $-SO_3^{\ominus}$ und 0,01 bis 200 Milliäquivalente pro 100 g an Carboxylgruppen $-COOH$ vorliegen.

Gegenstand der vorliegenden Erfindung ist schließlich auch die Verwendung der nach dem erfindungsgemäßen Verfahren zugänglichen Lösungen bzw. Dispersionen als Klebemittel zum Verkleben beliebiger Substrate, insbesondere zum Verkleben von Gummi mit sich selbst oder anderen

Materialien.

Die in den erfindungsgemäßen Lösungen bzw. Dispersionen vorliegenden Polyisocyanat-Polyadditionsprodukte zeichnen sich durch eine überraschende haftverbessernde Wirkung bei ihrer Verwendung als Klebemittel für Gummi mit sich selbst oder anderen Materialien aus. Darüber hinaus weisen die neuen Lösungen bzw. Dispersionen der Sulfonatgruppen aufweisenden Polyisocyanat-Polyadditionsprodukte eine ganz hervorragende Elektrolytbeständigkeit auf.

Ausgangsmaterialien für das erfindungsgemäße Verfahren sind beliebige nichtionische Polyisocyanate. Vorzugsweise werden Diisocyanate $Q(NCO)_2$ eingesetzt, wobei Q einen aliphatischen Kohlenwasserstoffrest mit 4 bis 12 Kohlenstoffatomen, einen cycloaliphatischen Kohlenwasserstoffrest mit 6 bis 15 Kohlenstoffatomen, einen aromatischen Kohlenwasserstoffrest mit 6 bis 15 Kohlenstoffatomen oder einen araliphatischen Kohlenwasserstoffrest mit 7 bis 15 Kohlenstoffatomen bedeutet. Beispiele derartiger bevorzugt einzusetzender Diisocyanate sind Tetramethylendiisocyanat, Hexamethylendiisocyanat, Dodecamethylendiisocyanat, 1,4-Diisocyanato-cyclohexan, 1-Isocyanato-3,3,5-trimethyl-5-isocyanatomethylcyclohexan, 4,4'-Diisocyanatodicyclohexyl-methyl, 4,4'-Diisocyanato-dicyclohexylpropan-(2,2), 1,4-Diisocyanatobenzol, 2,4-Diisocyanato-toluol, 2,6-Diisocyanatotoluol, 4,4'-Diisocyanato-diphenylmethan, 4,4'-Diisocyanato-diphenylpropan-(2,2), p-Xylylendiisocyanat oder $\alpha,\alpha,\alpha',\alpha'$-Tetramethyl-m- oder -p-xylylen-diisocyanat sowie aus diesen Verbindungen bestehende Gemische.

Es ist selbstverständlich auch möglich, die in der Polyurethan-Chemie an sich bekannten höherfunktionellen Polyisocyanate oder auch an sich bekannte modifizierte, beispielsweise Carbodiimidgruppen, Allophanatgruppen, Isocyanuratgruppen, Urethangruppen und/oder Biuretgruppen aufweisende Polyisocyanate anteilig (mit)zuverwenden.

Gegebenenfalls können bei der Herstellung der Polyadditionsprodukte auch Monoisocyanate, wie z. B. Phenylisocyanat, Hexylisocyanat oder Dodecylisocyanat mitverwendet werden, wobei jedoch durch gleichzeitige Mitverwendung von höher als difunktionellen Aufbaukomponenten ein vorzeitiger Kettenabbruch verhindert werden muß.

Weitere, gegebenenfalls bei der Durchführung des erfindungsgemäßen Verfahrens mitzuverwendende Aufbaukomponenten sind nichtionische Verbindungen mit mindestens zwei gegenüber Isocyanatgruppen reaktionsfähigen Gruppen, insbesondere insgesamt mindestens zwei Aminogruppen, Carboxylgruppen und/oder Hydroxylgruppen aufweisende organische Verbindungen des Molekulargewichtsbereiches 62 bis 10 000, vorzugsweise 500 bis 6000, mitverwendet. Bevorzugt werden die entsprechenden Dihydroxyverbindungen eingesetzt. Die Mitverwendung von im Sinne der Isocyanat-Polyadditionsreaktion tri- oder höherfunktionellen Verbindungen in geringen Anteilen zur Erzielung eines gewissen Verzweigungsgrades ist ebenso möglich wie die bereits erwähnte mögliche Mitverwendung von tri- oder höherfunktionellen Polyisocyanaten zum gleichen Zweck. Auch einwertige Alkohole wie z. B. n-Butanol oder n-Dodecanol können in geringen Mengen mitverwendet werden, allerdings nur unter den bereits bezüglich der Monoisocyanate genannten Bedingungen.

Obwohl es prinzipiell möglich ist, beim erfindungsgemäßen Verfahren alle beliebigen Polyhydroxyverbindungen, d. h., die in der Polyurethanchemie an sich bekannten Polyhydroxypolyäther, Polyhydroxypolythioäther, Polyhydroxypolyacetale und/oder Polyhydroxypolyesteramide einzusetzen, wie sie beispielsweise in US-PS 3 756 992 in Kolonnen 5 und 6 beispielhaft erläutert sind, kommen beim erfindungsgemäßen Verfahren bevorzugt die in der Polyurethanchemie an sich bekannten Polyhydroxypolyester, insbesondere Dihydroxypolyester, zum Einsatz. Es handelt sich hierbei um die an sich bekannten Umsetzungsprodukte von mehrwertigen, vorzugsweise zweiwertigen und gegebenenfalls zusätzlich dreiwertigen Alkoholen mit mehrwertigen, vorzugsweise zweiwertigen Carbonsäuren. Anstelle der freien Polycarbonsäuren können auch die entsprechenden Polycarbonsäureanhydride oder entsprechende Polycarbonsäureester von niedrigen Alkoholen oder deren Gemische zur Herstellung der Polyester verwendet werden. Die Polycarbonsäuren können aliphatischer, cycloaliphatischer, aromatischer und/oder heterocyclischer Natur sein und gegebenenfalls, z. B. durch Halogenatome, substituiert und/oder ungesättigt sein. Als Beispiele hierfür seien genannt: Bernsteinsäure, Adipinsäure, Korksäure, Azelainsäure, Sebacinsäure, Phthalsäure, Isophthalsäure, Trimellitsäure, Phthalsäureanhydrid, Tetrahydrophthalsäureanhydrid, Hexahydrophthalsäureanhydrid, Tetrachlorphthalsäureanhydrid, Endomethylentetrahydrophthalsäureanhydrid, Glutarsäureanhydrid, Maleinsäure, Maleinsäureanhydrid, Fumarsäure, dimere und trimere Fettsäuren wie Ölsäure, gegebenenfalls in Mischung mit monomeren Fettsäuren, Terephthalsäuredimethylester, Terephthalsäure-bis-glykolester. Als mehrwertige Alkohole kommen z. B. Äthylenglykol, Propylenglykol-(1,2) und -(1,3), Butylenglykol-(1,4) und -(2,3), Hexandiol-(1,6), Octandiol-(1,8), Neopentylglykol-Cyclohexandimethanol (1,4-Bis-hydroxymethylcyclohexan), 2-Methyl-1,3-propandiol, Glycerin, Trimethylolpropan, Hexantriol-(1,2,6), Butantriol-(1,2,4), Trimethyloläthan, Pentaerythrit, Chinit, Mannit und Sorbit, Methylglykosid, ferner Diäthylenglykol, Triäthylenglykol, Tetraäthylenglykol, Polyäthylenglykol, Dipropylenglykol, Polypropylenglykol, Dibutylenglykol und Polybutylenglykole in Frage. Die Polyester können anteilig endständige Carboxylgruppen aufweisen. Auch Polyester aus Lactonen, z. B. $\varepsilon$-Caprolacton oder Hydroxycarbonsäuren, wie z. B. $\omega$-Hydroxycapronsäure, sind einsetzbar.

Auch Hydroxylgruppen aufweisende Polycarbonate kommen in Betracht, z. B. solche, die durch Umsetzung von Diolen wie Propandiol-(1,3), Butandiol-(1,4) und/oder Hexandiol-(1,6), Diäthylenglykol,

Triäthylenglykol, Tetraäthylenglykol mit Diarylcarbonaten, z. B. Diphenylcarbonat oder Phosgen, hergestellt werden können.

Selbstverständlich können auch einfache Glykole wie z. B. Äthylen-, Propylen- oder Hexamethylenglykol mitverwendet werden.

Vertreter dieser zu verwendenden Verbindungen sind z. B. auch in High Polymers, Vol. XVI, »Polyurethanes, Chemistry and Technology«, verfaßt von Saunders-Frisch, Interscience Publishers, New York, Band I, 1962, Seiten 32–42 und Seiten 44–54, und Band II, Seiten 5–6 und 198–199, sowie im Kunststoff-Handbuch, Band VII, Vieweg-Höchtlen, Carl-Hanser-Verlag, München, 1966, z. B. auf den Seiten 45–71, beschrieben.

Neben diesen gegebenenfalls einzusetzenden, keine (potentiellen) ionischen Gruppen aufweisenden klassischen Aufbaukomponenten der Polyurethan-Chemie werden als weitere Aufbaukomponenten Verbindungen mitverwendet, welche mindestens eine, vorzugsweise zwei Isocyanatgruppen oder mindestens eine, vorzugsweise zwei gegenüber Isocyanatgruppen reaktionsfähige Gruppen und außerdem ionischen Gruppen der obengenannten Art, d. h. Sulfonatgruppen $-SO_3^{\ominus}$, oder durch eine einfache Neutralisationsreaktion in derartige ionische Gruppen überführbare potentielle ionische Gruppen aufweisen. Hierzu gehören beispielsweise mit derartigen (potentiellen) ionischen Gruppen modifizierte Isocyanate, wie sie in DT-OS 1 939 911, DT-OS 2 227 111 oder DT-OS 2 359 614 beschrieben sind, beispielsweise freie Sulfonsäuregruppen aufweisende aromatische Polyisocyanate, wie sie durch Sulfonierung von aromatischen Polyisocyanaten wie insbesondere 2,4-Diisocyanatotoluol oder 4,4'-Diisocyanatodiphenylmethan zugänglich sind.

Vorzugsweise erfolgt jedoch bei der Herstellung des erfindungsgemäß zu verwendenden Produkts die Einführung der genannten ionischen Gruppen durch Mitverwendung von (potentielle) derartige ionische Gruppen aufweisenden Verbindungen mit gegenüber Isocyanatgruppen reaktionsfähigen Wasserstoffatomen. Zu dieser Gruppe von Verbindungen gehören beispielsweise Diaminosulfonate der in CA-PS 928 323 beschrieben Art, wie z. B. das Natriumsalz der N-(2-Aminoäthyl)-2-aminoäthansulfonsäure, und Sulfonatdiole der allgemeinen Formel

$$H-\left(O\underset{\underset{R}{|}}{CH}-CH_2\right)_n-O-(A)_o-\underset{\underset{\underset{SO_3^{\ominus}}{(CH_2)_q}}{|}}{CH}-(B)_p-O-\left(CH_2-\underset{\underset{R}{|}}{CH}-O\right)_m H \qquad X^{\oplus}$$

wobei

A und B für gleiche oder verschiedene zweiwertige aliphatische Kohlenwasserstoffreste mit 1 bis 6 Kohlenstoffatomen stehen,

R für Wasserstoff, einen aliphatischen Kohlenwasserstoffrest mit 1 bis 4 Kohlenstoffatomen oder einen Phenylrest steht,

$X^{\oplus}$ für ein Alkalimetallkation oder eine gegebenenfalls substituierte Ammoniumgruppe steht,

n und m für gleiche der verschiedenen Zahlen von 0 bis 30 stehen,

o und p für jeweils 0 oder 1 stehen und

q für eine ganze Zahl von 0 bis 2 steht.

Die Überführung der gegebenenfalls zunächst in das Polyadditionsprodukt eingebauten potentiellen ionischen Gruppen in ionische Gruppen geschieht in an sich bekannter Weise durch Neutralisation der potentiellen ionischen Gruppen. Geeignete Neutralisationsmittel sind in US-PS 3 479 310, Kolonne 6, beschrieben.

In den Polyadditionsprodukten liegt somit $SO_3^{\ominus}$ als ionische Gruppen vor.

Vorzugsweise erfolgt der Einbau der ionischen Gruppen in die Polyadditionsprodukte nach den nachstehenden Methoden 1) oder 2), wobei man sich während des Aufbaus des Polyadditionsproduktes auch gegebenenfalls beide dieser Methoden bedienen kann:

1) Die (potentiellen) ionischen Gruppen werden über geeignete (potentiell) ionisch modifizierte Diole in das Präpolymer eingebaut;
2) die (potentiellen) ionischen Gruppen werden mittels geeigneter modifizierter Amine mit zwei primären und/oder sekundären Aminogruppen in das Polyadditionsprodukt eingebaut.

Zur Einführung der erfindungswesentlichen Carboxylgruppen werden beim erfindungsgemäßen Verfahren Aufbaukomponenten mitverwendet, die neben freien Carboxylgruppen gegenüber Isocyanatgruppen im Sinne der Isocyanat-Additionsreaktion höherreaktive Gruppen als diese Carboxylgruppen aufweisen. Vorzugsweise werden solche derartige Verbindungen eingesetzt, die neben mindestens einer Carboxylgruppe zwei höherreaktive Gruppen aufweisen. Es handelt sich bei

diesen Aufbaukomponenten im allgemeinen um einfache Hydroxycarbonsäuren oder Aminocarbonsäuren.

Beispiele geeigneter Hydroxycarbonsäuren sind z. B. Glycerinsäure, Glykolsäure, Milchsäure, Apfelsäure, Dioxymaleinsäure, Dioxyfumarsäure, Weinsäure, Dioxyweinsäure, Schleimsäure, Citronensäure, β-Oxypropionsäure oder insbesondere 2,2-Dimethylolpropionsäure bzw. ähnliche Säuren mit sterisch gehinderten Carboxyl- und freien ungehinderten Hydroxylgruppen. Auch Umsetzungsprodukte von beispielsweise Dicarbonsäureanhydriden wie z. B. Tetrahydrophthalsäureanhydrid mit mehrwertigen Alkoholen wie z. B. Trimethylolpropan im Molverhältnis 1 : 1 sind denkbare Aufbaukomponenten zur Einführung der erfindungswesentlichen Carboxylgruppen.

Geeignete Aminocarbonsäuren sind beispielsweise aliphatische, cycloaliphatische, aromatische und heterocyclische Mono- und Diaminocarbonsäure, wie z. B. Glycin, α- und β-Alanin, 6-Aminocapronsäure, 4-Aminobuttersäure, Sarkosin, Methionin, Leucin, Isoleucin, Serin, Valin, Ornithin, Hisitidin, Lysin, Prolin, Phenylalanin, Threonin, Cystein, Asparagin, Glutamin, Arginin, Asparaginsäure, Glutaminsäure, Oxalursäure, Anilidoessigsäure, Anthranilsäure, 2-Äthylaminobenzoesäure, 3-Aminobenzoesäure, 4-Aminobenzoesäure, N-Phenylaminoessigsäure, 3,4-Diaminobenzoesäure, 5-Aminobenzoldicarbonsäure.

Die genaue chemische Natur der Carboxylgruppen aufweisenden Aufbaukompontente ist nicht wesentlich. Es kommt einzig und allein darauf an, daß diese Aufbaukomponenten neben freien Carboxylgruppen NCO-reaktive Gruppen aufweisen, die gegenüber Isocyanatgruppen eine höhere Reaktionsbereitschaft als die Carboxylgruppen zeigen. Besonders bevorzugte Aufbaukomponente mit einer freien Carboxylgruppe ist 2,2'-Dimethylolpropionsäure.

Bei der Durchführung des erfindungsgemäßen Verfahrens wird nach den an sich bekannten Prinzipien der Herstellung von wäßrigen Polyurethandispersionen bzw. -lösungen verfahren. Dies bedeutet, daß entweder der Aufbau des Polyurethanmoleküls zumindest teilweise in Gegenwart von Wasser erfolgt, so daß unmittelbar eine wäßrige Lösung bzw. Dispersion erhalten wird, oder aber, daß das erfindungsgemäße Verfahren in Abwesenheit von Wasser bis Beendigung des Aufbaus des Makromoleküls durchgeführt wird, worauf sich eine an sich bekannte Überführung des Polyurethans in eine wäßrige Lösung bzw. Dispersion anschließt.

In beiden Fällen werden bei der Durchführung des erfindungsgemäßen Verfahrens die genannten Aufbaukomponenten in solchen Mengen eingesetzt, daß das Äquivalentverhältnis aller am Aufbau beteiligten Isocyanatgruppen zu allen gegenüber Isocyanatgruppen reaktionsfähigen Gruppen mit Ausnahme der erfindungswesentlichen Carboxylgruppen und mit Ausnahme des gegebenenfalls bei der Herstellung des Polyurethans bereits vorliegenden Wassers zwischen 4 : 1 und 1 : 1, vorzugsweise zwischen 2 : 1 und 1,2 : 1 liegt. Bei Verwendung eines hohen NCO-Überschusses entstehen hierbei NCO-Präpolymere, die mit dem als Lösungs- bzw. Dispergiermedium dienenden Wasser unter Kettenverlängerung abreagieren.

Das rechnerische Molekulargewicht der erfindungsgemäßen Verfahrensprodukte liegt im allgemeinen über 30 000, vorzugsweise über 50 000. Es kann anhand der Funktionalität der zum Einsatz gelangenden Aufbaukomponenten sowie anhand des Äquivalentverhältnisses zwischen Isocyanatgruppen und gegenüber Isocyanatgruppen reaktionsfähigen Gruppen durch einfache stöchiometrische Berechnung ermittelt werden.

Die Menge der Aufbaukomponenten mit (potentiellen) ionischen Gruppen sowie bei Verwendung von potentiellen ionischen Gruppen der Neutralisationsgrad wird bei der Durchführung des erfindungsgemäßen Verfahrens so gewählt, daß in den Verfahrensprodukten 0,01 bis 200, vorzugsweise 1 bis 60 und insbesondere 5 bis 30 Milliäquivalente an ionischen Gruppen $-SO_3^{\ominus}$ vorliegen.

Hierbei ist zu beachten, daß zur Gewährleistung einer einwandfreien Dispergierbarkeit bzw. Löslichkeit der erfindungsgemäßen Verfahrensprodukte in Wasser bei Abwesenheit sonstiger hydrophiler Zentren ein Gehalt von mindestens 8 Milliäquivalenten pro 100 g Feststoff erforderlich ist, während zur Erzielung des klebetechnischen synergistischen Effekts zwischen Carboxylgruppen und den genannten ionischen Gruppen eine Konzentration an ionischen Gruppen von lediglich 0,01 bis 3 Milliäquivalenten pro 100 g Feststoff ausreichend wäre. Es ist daher möglich, die Aufbaukomponenten mit (potentiellen) ionischen Gruppen bzw. den Neutralisationsgrad der potentiellen ionischen Gruppen so niedrig zu wählen, daß lediglich die genannten klebetechnischen Voraussetzungen erfüllt sind, ohne daß der Gehalt an ionischen Gruppen in den erfindungsgemäßen Verfahrensprodukten allein zur Gewährleistung einer Löslichkeit bzw. Dispergierbarkeit in Wasser ausreicht. In einem solchen Fall müssen dann beim erfindungsgemäßen Verfahren zusätzlich zu den beispielhaft genannten Aufbaukomponenten mit (potentiellen) ionischen Gruppen weitere Aufbaukomponten mit die Löslichkeit bzw. Dispergierbarkeit der Verfahrensprodukte in Wasser gewährleistenden hydrophilen Gruppen mitverwendet werden. Bei diesen weiteren Aufbaukomponenten handelt es sich im allgemeinen um Äthersegmente mit Äthylenoxid-Einheiten $-CH_2-CH_2-O-$ aufweisende, im Sinne der Isocyanat-Polyadditionsreaktion vorzugsweise difunktionelle Verbindungen, d. h. Diisocyanate oder Glykole. Beispiele derartiger Aufbaukomponenten mit hydrophilen Polyätherketten sind den deutschen Offenlegungsschriften 2 314 512, 2 314 513, 2 320 719, 2 551 094, 2 555 534 oder den US-Patenten 3 920 598, 3 905 929, 3 935 146 oder den US-Anmeldungen 741 818 bzw. 746 919 zu

entnehmen. Die Menge der nicht ionisch-hydrophilen Aufbaukomponenten richtet sich, wie dargelegt, in erster Linie nach der Menge der ohnehin vorliegenden ionischen Gruppen. Die optimale Menge dieser Aufbaukomponente kann zuverlässig in einem orientierenden Vorversuch ermittelt werden. Im allgemeinen liegt der Gehalt der erfindungsgemäßen Verfahrensprodukte an innerhalb hydrophiler Polyätherketten eingebauten Äthylenoxideinheiten $-CH_2-CH_2-O-$ zwischen 0 und 20, vorzugsweise 0 und 10 Gew.-%.

Die Menge der Carboxylgruppen aufweisenden Aufbaukomponente wird bei der Durchführung des erfindungsgemäßen Verfahrens so bemessen, daß in den Verfahrensprodukten 0,01 bis 200, vorzugsweise 1,10 bis 50 und insbesondere 0,5 bis 20 Milliäquivalente pro 100 g Feststoff an Carboxylgruppen $-COOH$ vorliegen.

Vorzugsweise verfährt man bei der Durchführung des erfindungsgemäßen Verfahrens nach einer der beiden folgenden Varianten:

1. Man stellt durch Umsetzung in der Schmelze oder in Gegenwart eines geeigneten inerten Lösungsmittels wie beispielsweise Aceton zunächst ein ionische Gruppen der beispielhaft genannten Art und gegebenenfalls nichtionisch-hydrophile Gruppen sowie freie Carbonsäuregruppen aufweisendes NCO-Präpolymer her, indem man die beispielhaft genannten Ausgangsmaterialien im Temperaturbereich von 5 bis 160° C in den angegebenen Mengenverhältnissen zur Reaktion bringt, wobei man keine potentiellen ionischen Aufbaukomponenten, sondern bereits ionische Gruppen aufweisende einsetzt. Anschließend erfolgt die Überführung der NCO-Präpolymeren in eine wäßrige Dispersion nach den an sich bekannten Prinzipien, wie sie beispielsweise in den bereits genannten Literaturstellen oder in US-PS 3 479 310, DT-OS 2 446 440 bzw. US-Anmeldung 777 206 niedergelegt sind, wobei man sich entweder des Wassers oder geeigneter niedermolekularer Aufbaukomponenten, insbesondere geeigneter Diamine, der in den genannten Literaturstellen offenbarten Art zur Kettenverlängerung der NCO-Präpolymeren bedient.
2. Man stellt zunächst ein potentielle ionische Gruppen der genannten Art aufweisendes NCO-Präpolymer her, indem man in Abwandlung der obengenannten Methode 1) potentielle ionische Gruppen aufweisende Aufbaukomponenten zur Herstellung der NCO-Präpolymeren einsetzt und neutralisiert diese potentiellen ionischen Gruppen vor und/oder während der vorzugsweise in wäßrigem Milieu ablaufenden Kettenverlängerungsreaktion gemäß den Verfahren der obengenannten Literaturstellen.

Die Frage, ob es sich bei den genannten wäßrigen Systemen um Lösungen oder um Dispersionen handelt, ist in erster Linie abhängig von der Konzentration der genannten hydrophilen Zentren und kann durch entsprechende Variation der Mengenverhältnisse der Ausgangsmaterialien leicht den jeweiligen Bedürfnissen angepaßt werden.

Bei der Durchführung des erfindungsgemäßen Verfahrens wird im übrigen die Menge des Wassers so bemessen, daß 10- bis 60-, vorzugsweise 20- bis 50gew.-%ige Lösungen bzw. Dispersionen der Polyurethane anfallen. Den Lösungen bzw. Dispersionen können die üblichen Hilfs- und Zusatzstoffe beigemischt werden, wie sie beispielsweise in US-PS 3 479 310, Kolonne 8, Zeile 40, Kolonne 9, Zeile 10, beschrieben sind.

Die die erfindungsgemäßen Verfahrensprodukte darstellenden Lösungen bzw. Dispersionen können als solche unmittelbar zum Verkleben beliebiger Substrate verwendet werden. Sie eignen sich insbesondere zur Herstellung von Verklebungen von Gummi mit sich selbst oder anderen Materialien. Die Verarbeitung der erfindungsgemäßen Verfahrensprodukte bei der erfindungsgemäßen Verwendung erfolgt nach den an sich bekannten Methoden der Klebetechnologie bei Verarbeitung von wäßrigen Dispersions- bzw. Lösungsklebstoffen.

Die nachstehenden Beispiele dienen deren weiteren Erläuterung der Erfindung. »Milliäquivalentprozent« bedeutet Milliäquivalente pro 100 g Feststoff.

Die klebtechnischen Daten sind in einer Tabelle am Ende des experimentellen Teils zusammengefaßt.

## Beispiel 1

### Ansatz

400,0 g Adipinsäure-Butandiol-Polyester (OHZ 50) (PE)
1,5 g Dimethylolpropionsäure (DMPA)
49,4 g Toluylendiisocyanat 2,4/2,6 Isomeres wie 65 : 35 (T 65)
1000,0 g Aceton
31,9 g Äthylendiamino-2-äthansulfonsaures Natrium (45%ig in Wasser) (AAS-Lösung)
750,0 g entsalztes Wasser

Durchführung

Der Polyester (PE) wird 30 Minuten bei 120° C im Vakuum unter Rühren entwässert und auf 60° C abgekühlt. Es wird (DMPA) eingerührt und nach 5 Minuten T 65 zugegeben. Die Temperatur wird auf 80° C erhöht. Man rührt so lange, bis ein NCO-Wert von 1,65% erreicht ist. Langsam wird Aceton zugegeben, wobei die Temperatur auf 50° C gehalten wird. In die homogene, acetonische Lösung wird die AAS-Lösung eingerührt. Nach 5 Minuten wird mit Wasser dispergiert und anschließend sofort das Aceton abdestilliert. Der Feststoff der Dispersion enthält 2,36 Milliäquivalentprozent an freier Carbonsäure und 16,2 Milliäquivalentprozent an $SO_3^{\ominus}$-Gruppen. Die Dispersion zeigt im durchscheinenden Licht einen Tyndall-Effekt. Ihre Fordbecherviskosität (4-mm-Düse) beträgt bei 41,85% Feststoff 16 Sekunden. Der pH-Wert beträgt 5,3.

Vergleichsversuch 1A und B

Ansatz

| | |
|---|---|
| 400,0 g | Adipinsäure-Butandiol-Polyester (OHZ 50) (PE) |
| 45,0 g | Toluylendiisocyanat 2,4/2,6-Isomeres wie 65 : 35 (T 65) |
| 900,0 g | Aceton |
| 31,3 g | Äthylendiamino-2-äthansulfonsaures Natrium (45%ig in Wasser) (AAS-Lösung) |
| 700,0 g | entsalztes Wasser |

Durchführung: vgl. Beispiel 1

A Es entsteht eine feinteilige Dispersion mit einem Feststoffgehalt von 40,2% und einer Fordbecherviskosität (4-mm-Düse) von 17,2 Sekunden. Der Feststoff enthält 16,2 Milliäquivalentprozent an $SO_3^{\ominus}$-Gruppen.

B In diese Dispersion werden 0,65 g Essigsäure eingerührt. Auf Feststoff berechnet erhält die Dispersion jetzt 2,36 Milliäquivalentprozent an $-COOH$-Gruppen.

Vergleichsversuch 1C

Ansatz

| | |
|---|---|
| 400,0 g | Adipinsäure-Butandiol-Polyester (OHZ 50) (PE) |
| 44,0 g | Toluylendiisocyanat 2,4/2,6-Isomeres wie 65 : 35 (T 65) |
| 790,0 g | Aceton |
| 34,5 g | Kaliumlysinat (45,5%ig in Wasser) |
| 710,0 g | entsalztes Wasser |

Durchführung

Der Polyester (PE) wird 30 Minuten bei 120° C im Vakuum unter Rühren entwässert und auf 60° C abgekühlt. Es wird T 65 zugegeben und die Temperatur langsam auf 80° C erhöht. Man rührt so lange, bis ein NCO-Wert von 1,4% erreicht ist. Langsam wird Aceton zugegeben, wobei die Temperatur auf 50° C gehalten wird. In die homogene acetonische Lösung wird das Kaliumlysinat mit 170 g Wasser eingerührt. Nach 5 Minuten wird mit dem Rest Wasser dispergiert und anschließend sofort das Aceton im Vakuum abdestilliert.

Der Feststoff der Dispersion enthält 18,5 Milliäquivalentprozent $CO_2^{\ominus}$-Gruppen. Die Dispersion zeigt im durchscheinenden Licht einen Tyndall-Effekt. Ihre Fordbecherviskosität (4-mm-Düse) beträgt bei einem Feststoffgehalt von 38% 15 Sekunden.

Vergleichsbeispiel 1D

Ansatz

| | |
|---|---|
| 400,0 g | Adipinsäure-Butandiol-Polyester (OHZ 50) (PE) |
| 1,5 g | Dimethylolpropionsäure |
| 46,5 g | Toluylendiisocyanat 2,4/2,6-Isomeres wie 65 : 35 (T 65) |
| 785,0 g | Aceton |

34,5 g Kaliumlysinat (45,5%ig in Wasser)
716,0 g entsalztes Wasser

Durchführung: vgl. Vergleichsbeispiel 1C

Der Feststoff der Dispersion enthält 18,5 m-Äquivalentprozent $CO_2^{\ominus}$-Gruppen und 2,36 m-Äquivalentprozent COOH-Gruppen. Die Dispersion hat bei einem Feststoffgehalt von 45% eine Fordbecherviskosität (4-mm-Düse) von 52 Sekunden.

## Beispiel 2

### Ansatz

400,0 g Adipinsäure-Butandiol-Polyester (OHZ 50) (PE)
5,9 g Dimethylolpropionsäure (DMPA)
57,9 g Toluylendiisocyanat 2,4/2,6-Isomeres wie 65 : 35 (T 65)
790,0 g Aceton
33,8 g Äthylendiamino-2-äthansulfonsaures Natrium (45%ig in Wasser) (AAS-Lösung)
710,0 g entsalztes Wasser

Durchführung: vgl. Beispiel 1

Es entsteht eine zentrifugenstabile Dispersion, die im durchscheinenden Licht einen Tyndall-Effekt aufweist. Die Fordbecherviskosität (4-mm-Düse) beträgt bei einem Feststoffgehalt von 38,1% 12,0 Sekunden. Der pH-Wert beträgt 4,5. Der Feststoff enthält 16,7 m-Äquivalentprozent an $SO_3^{\ominus}$-Gruppen und 9,2 m-Äquivalentprozent an $CO_2$-Gruppen.

## Beispiel 3

### Ansatz

400,0 g Adipinsäure-Butandiol-Polyester (OHZ 50) (PE)
11,8 g Dimethylolpropionsäure
69,4 g Toluylendiisocyanat 2,4/2,6-Isomeres wie 65 : 35 (T 65)
1120,0 g Aceton
42,2 g Äthylendiamino-2-äthansulfonsaures Natrium (45%ig in Wasser) (AAS-Lösung)
730,0 g entsalztes Wasser

Durchführung: vgl. Beispiel 1

Es entsteht eine feinteilige Dispersion mit einem Feststoffgehalt von 39,5% und eine Fordbecherviskosität (4-mm-Düse) von 32 Sekunden. Der Feststoff enthält 20,0 m-Äquivalentprozent an $SO_3^{\ominus}$-Gruppen und 17,6 m-Äquivalentprozent an —COOH-Gruppen.

## Beispiel 4

### Ansatz

210 g Phthalsäure-Hexandiol-Polyester (OHZ 56) (PE)
0,8 g Dimethylolpropionsäure (DMPA)
33,6 g Hexamethylen-(1,6)-diisocyanat (H)
570 g Aceton
22,4 g Äthylendiamino-2-äthansulfonsaures Natrium (45%ig in Wasser) (AAS-Lösung)
320 g entsalztes Wasser

Durchführung

Der Polyester (PE) wird 30 Minuten bei 120°C im Vakuum unter Rühren entwässert und auf 80°C abgekühlt. Es wird (DMPA) eingerührt und nach 5 Minuten bei 70°C das Diisocyanat (H) zugegeben. Es wird bei 80°C gerührt, bis ein NCO-Wert von 3,04% erreicht ist. Langsam wird das Aceton zugegeben, wobei eine Temperatur von 50°C gehalten wird. In die homogene, acetonische Lösung wird die AAS-Lösung eingerührt. Nach 5 Minuten wird die 50°C warme Lösung mit Wasser von Raumtemperatur dispergiert. Anschließend wird das Aceton sofort abdestilliert.

Der Feststoff der Dispersion enthält 20,9 m-Äquivalente an $SO_3^\ominus$-Gruppen und 2,36 m-Äquivalente an freien –COOH-Gruppen in 100 g. Die Dispersion zeigt im durchscheinenden Licht einen Tyndall-Effekt. Ihre Fordbecherviskosität (4-mm-Düse) beträgt bei 38% Feststoffgehalt 13,6 Sekunden. Der pH-Wert beträgt 6,7.

Vergleichsbeispiel 4 A

Ansatz

| | |
|---|---|
| 210 g | Phthalsäure-Hexandiol-Polyester (OHZ 56) (PE) |
| 31,4 g | Hexamethylen-(1,6)-diisocyanat (H) |
| 450 g | Aceton |
| 22,2 g | Äthylendiamino-2-äthansulfonsaures Natrium (45%ig in Wasser) (AAS-Lösung) |
| 288 g | entsalztes Wasser |

Durchführung: vgl. Beispiel 4

Man erhält eine feinteilige Dispersion mit einer Fordbecherviskosität (4-mm-Düse) von 15 Sekunden bei einem Feststoff von 40,2%. Der Feststoff enthält 20,9 m-Äquivalentprozent an $SO_3^\ominus$-Gruppen.

Tabelle der klebtechnischen Prüfung auf Nora-Testgummi

| | m-Äquivalente/100 g Feststoff | | | | | Schälfestigkeit in kg/cm (DIN 53273) | | |
|---|---|---|---|---|---|---|---|---|
| | | | | –COOH | | | | |
| | $SO_3^\ominus$ | $CO_2^\ominus$ | $N^\oplus$ | intern | extern | sofort | 24 h | 9 d |
| Beispiel 1 | 16,2 | – | – | 2,36 | – | 3,5 | 5,4 | 5,5 |
| Vergleichsbeispiel | | | | | | | | |
| 1A | 16,2 | – | – | – | – | 1,6 | 1,6 | 1,6 |
| 1B | 16,2 | – | – | – | 2,36 | 2,1 | 1,5 | 1,7 |
| 1C | – | 18,4 | – | – | – | 0,4 | 0,4 | 0,6 |
| 1D | – | 18,5 | – | 2,36 | – | 2,1 | 3,0 | 2,5 |
| Beispiel 2 | 16,7 | – | – | 9,2 | – | 2,5 | 2,5 | 4,0 |
| Beispiel 3 | 20,0 | – | – | 17,6 | – | 5,0 | 5,2 | 5,2 |
| Beispiel 4 | 20,9 | – | – | 2,36 | – | 4,0 | 4,6 | 4,4 |
| Vergleichsbeispiel 4A | 20,9 | – | – | – | – | 2,1 | 2,3 | 3,0 |

**Patentansprüche**

1. Wäßrige Lösungen oder Dispersionen von Polyisocyanat-Polyadditionsprodukten, gekennzeichnet durch einen Gehalt von 0,01 bis 200 Milliäquivalenten pro 100 g an Sulfonationen $-SO_3^\ominus$ und 0,01 bis 200 Milliäquivalenten pro 100 g an Carboxylgruppen –COOH, bezogen auf gelöstes bzw. dispergiertes Polyisocyanat-Polyadditionsprodukt.

2. Verfahren zur Herstellung wäßriger Lösungen oder Dispersionen von ionische Gruppen aufweisenden Polyisocyanat-Polyadditionsprodukten gemäß Anspruch 1 durch Umsetzung von

a) organischen Polyisocyanaten, gegebenenfalls unter gleichzeitiger Mitverwendung von organischen Monoisocyanaten mit
b) organischen Verbindungen, welche mindestens zwei gegenüber Isocyanatgruppen im Sinne der Isocyanat-Additionsreaktion reaktionsfähige Gruppen enthalten, gegebenenfalls unter Mitverwendung von organischen Verbindungen, welche eine gegenüber Isocyanatgruppen im Sinne der Isocyanatadditionsreaktion reaktionsfähige Gruppe enthalten,

wobei als Komponente a) und/oder b) Verbindungen (mit)verwendet werden, welche ionische Gruppen und/oder in ionische Gruppen überführbare Gruppen enthalten, die im Anschluß an die Umsetzung zumindest teilweise in an sich bekannter Weise in ionische Gruppen überführt werden, und wobei entweder die Umsetzung zumindest teilweise in Gegenwart von Wasser so durchgeführt wird, daß als Umsetzungsprodukt direkt eine wäßrige Lösung oder Dispersion entsteht, oder die Umsetzung in Abwesenheit von Wasser durchgeführt wird, worauf sich eine Überführung der Umsetzungsprodukte in eine wäßrige Lösung oder Dispersion in an sich bekannter Weise anschließt, dadurch gekennzeichnet, daß man

(i) als Verbindungen mit ionischen Gruppen und/oder in ionische Gruppen überführbare Gruppen Sulfonat- oder Sulfonsäuregruppen aufweisende Verbindungen verwendet,
(ii) außer den bereits genannten Aufbaukomponenten Verbindungen mit freien Carboxylgruppen und mit gegenüber Isocyanatgruppen reaktionsfähigere Gruppen als diese Carboxylgruppen aufweisende Verbindungen mitverwendet, und
(iii) Art und Mengenverhältnisse der Aufbaukomponenten sowie den Neutralisationsgrad der genannten potentiellen ionischen Gruppen so wählt, daß in den gelösten bzw. dispergierten Polyisocyanat-Polyadditionsprodukten, bezogen auf Reststoff 0,01 bis 200 Milliäquivalente pro 100 g Sulfonationen $-SO_3^{\ominus}$ und 0,01 bis 200 Milliäquivalente pro 100 g an Carboxylgruppen $-COOH$ vorliegen.

3. Verwendung der wäßrigen Lösungen bzw. Dispersionen gemäß Anspruch 1 als Klebemittel für beliebige Substrate.

4. Verwendung gemäß Anspruch 3 zum Verkleben von Gummi mit sich selbst oder anderen Materialien.

**Claims**

1. Aqueous solutions or dispersions of polyisocyanate-polyaddition products characterised by containing from 0.01 to 200 milliequivalents of sulphonate ions $SO_3^{\ominus}$ per 100 g and from 0.01 to 200 milliequivalents of carboxyl groups $-COOH$ per 100 g, based on dissolved or dispersed polyisocyanate-polyaddition product.

2. Process for the preparation of aqueous solutions or dispersions of polyisocyanate-polyaddition products containing ionic groups according to Claim 1 by the reaction of

a) organic polyisocyanates optionally with the simultaneous addition of organic monoisocyanates with
b) organic compounds which contain at least two groups which are capable of undergoing addition reactions with isocyanate groups, optionally with the addition of organic compounds which contain a group capable of undergoing an addition reaction with isocyanate groups,

the compounds used as all or part of component a) and/or b) being compounds which contain ionic groups and/or groups which are capable of being converted into ionic groups and which are at least partly converted into ionic groups in known manner after the reaction, the reaction either being at least partly carried out in the presence of water so that the reaction product is directly obtained as an aqueous solution or dispersion, or the reaction is carried out in the absence of water, whereupon the reaction products are converted into an aqueous solution or dispersion in known manner, characterised in that

(i) the compounds used which contain ionic groups and/or groups capable of conversion into ionic groups are compounds having sulphonate or sulphonic acid groups,
(ii) in addition to the starting components already mentioned above, there are used compounds which have free carboxyl groups and compounds which have groups which are more highly reactive with isocyanate groups than these carboxyl groups and

(iii) the nature and proportions of the starting components and the degree of neutralization of the above mentioned potential ionic groups are chosen so that the dissolved or dispersed polyisocyanate-polyaddition products contain, based on the solid content, from 0.01 to 200 milliequeivalents of sulphonate ions $-SO_3^{\ominus}$ per 100 g and from 0.01 to 200 milliequivalents of carboxyl groups $-COOH$ per 100 g.

3. Use of the aqueous solutions or dispersions according to Claim 1 as adhesives for any substrates.
4. Use according to Claim 3 for bonding rubber to rubber or to other materials.

**Revendications**

1. Solutions ou dispersions aqueuses de produits de polyaddition de polyisocyanates, caractérisées en ce que, pour 100 g, elles contiennent 0,01 à 200 milliéquivalents d'ions sulfonate $-SO_3^{\ominus}$ et 0,01 à 200 milliéquivalents de groupes carboxy $-COOH$, calculé sur le produit de polyaddition de polyisocyanates en solution ou en dispersion.
2. Procédé de préparation de solutions ou de dispersions aqueuses de produits de polyaddition de polyisocyanates comportant des groupes ioniques suivant la revendication 1, en faisant réagir:

a) des polyisocyanates organiques en utilisant éventuellement conjointement des monoisocyanates organiques, avec
b) des composés organiques contenant au moins deux groupes réactifs vis-à-vis des groupes isocyanate dans le sens de la réaction d'addition d'isocyanates, en utilisant éventuellement conjointement des composés organiques contenant un groupe réactif vis-à-vis des groupes isocyanate dans le sens de la réaction d'addition d'isocyanates,

en utilisant (conjointement), comme composant (a) et/ou composant (b), des composés contenant des groupes ioniques et/ou des groupes transformables en groupes ioniques qui, à la suite de la réaction, sont transformés au moins partiellement et de façon connue en soi, en groupes ioniques, la réaction étant effectuée au moins partiellement en présence d'eau de façcon à obtenir directement, comme produit réactionnel, une solution ou une dispersion aqueuse, ou encore, la réaction étant effectuée en absence d'eau, pour transformer ensuite, de façon connue en soi, les produits réactionnels en une solution ou une dispersion aqueuse, caractérisé en ce que:

(i) comme composés comportant des groupes ioniques et/ou des groupes transformables en groupes ioniques, on utilise des composés comportant des groupes sulfonate ou d'acide sulfonique,
(ii) outre les composants de structuration déjà mentionnés, on utilise conjointement des composés comportant des groupes carboxy libres et des composés comportant des groupes qui, vis-à-vis des groupes isocyanate, sont plus réactifs que ces groupes carboxy, et
(iii) on choisit la nature et les rapports quantitatifs des composants de structuration, ainsi que le degré de neutralisation des groupes ioniques potentiels mentionnés de telle sorte que les produits de polyaddition de polyisocyanates en solution ou en dispersion contiennent, pour 100 g de matière solide, 0,01 à 200 milliéquivalents d'ions sulfonate $-SO_3^{\ominus}$ et 0,01 à 200 milliéquivalents de groupes carboxy $-COOH$.

3. Utilisation de solutions ou de dispersions aqueuses suivant la revendication 1 comme adhésifs pour n'importe quel substrat.
4. Utilisation suivant la revendication 3 pour le collage du caoutchouc avec lui-même ou avec d'autres matières.